Europäisches Patentamt

**European Patent Office**

Office européen des brevets

(19)

(11) Numéro de publication: **0 010 102**
**B1**

(12)

# FASCICULE DE BREVET EUROPEEN

(45) Date de publication du fascicule du brevet: **20.01.82**

(51) Int. Cl.³: **F 16 F 7/00** //B41J19/10

(21) Numéro de dépôt: **79900177.1**

(22) Date de dépôt: **06.02.79**

(86) Numéro de dépôt international:
**PCT/CH79/00019**

(87) Numéro de publication internationale:
**WO 79/00601 23.08.79 Gazette 79/17**

(54) **MECANISME DE BUTEE A AMORTISSEMENT.**

(30) Priorité: **07.02.78 CH 1327/78**

(43) Date de publication de la demande:
**30.04.80 Bulletin 80/9**

(45) Mention de la délivrance du brevet:
**20.01.82 Bulletin 82/3**

(84) Etats contractants désignés:
**DE FR GB SE**

(56) Documents cités:
**FR - A - 1 163 364**
**GB - A - 530 182**
**US - A - 2 826 287**

(73) Titulaire: **HERMES PRECISA INTERNATIONAL S.A.**
**8, rue des Pêcheurs**
**CH-1400 Yverdon (CH)**

(72) Inventeur: **COSTA, Jorge**
**Jordils, 13bis**
**CH-1400, Yverdon (CH)**

(74) Mandataire: **Ardin, Pierre et al,**
**PIERRE ARDIN & CIE 22, rue du Mont-Blanc**
**CH-1211 Geneve 1 (CH)**

Courier Press, Leamington Spa, England.

Mécanisme de butée à amortissement

La présente invention concerne un mécanisme de butée à amortissement, comprenant une pièce du butée servant d'arrêt pour un mobile en mouvement, la pièce de butée étant susceptible de se déplacer sous l'effet de l'énergie cinétique dudit mobile contre l'action d'un ressort et d'un amortisseur.

Ce type de mécanisme permet de diminuer les sollicitations dues aux chocs dans le mobile lorsque ce dernier coopère avec la pièce de butée, donc de diminuer les dimensions des pièces et d'en réduire le coût.

Dans de nombreuses applications, le mécanisme de butée sert à fixer la position du mobile à l'arrêt, le mobile étant verrouillé après sa course d'arrêt lorsque sa vitesse est nulle ou négligeable, le ressort de rappel étant comprimé. Dans ces cas, on fait généralement appel à une pièce intermédiaire entre le mobile et la butée, cette pièce intermédiaire étant dégagée lorsque le mobile est verrouillé.

Or, dans les mécanismes connus, la course d'arrêt dépend de l'énergie cinétique du mobile et il en résulte une incertitude de la position d'arrêt du mobile par rapport à la position du mécanisme de butée. Cela peut être très gênant pour certaines applications et notamment dans le cas où on utilise un mécanisme de butée de ce genre pour arrêter le chariot porteur d'un support de caractère d'une machine à écrire lors d'une tabulation par exemple.

Le but de l'invention est de réaliser un mécanisme de butée à amortissement asurant une course d'arrêt constante d'un mobile a arrêter quelle que soit sa vitesse initiale.

Le mécanisme de butée selon l'invention est caractérisé en ce qu'il comprend un dispositif d'entraînement de la pièce de butée provoquant un déplacement prédéterminé de cette dernière, dans le même sens que le déplacement produit par le mobile lorsqu'il vient en butée, ce dispositif d'entraînement étant rendu actif par le mobile arrivant en position de début de butée.

Le dessin annexé représente, schématiquement et à titre d'exemple, une forme d'exécution du mécanisme de butée à amortissement, objet de l'invention.

La figure 1 en est une vue de côté.

La figure 2 en est une vue en élévation.

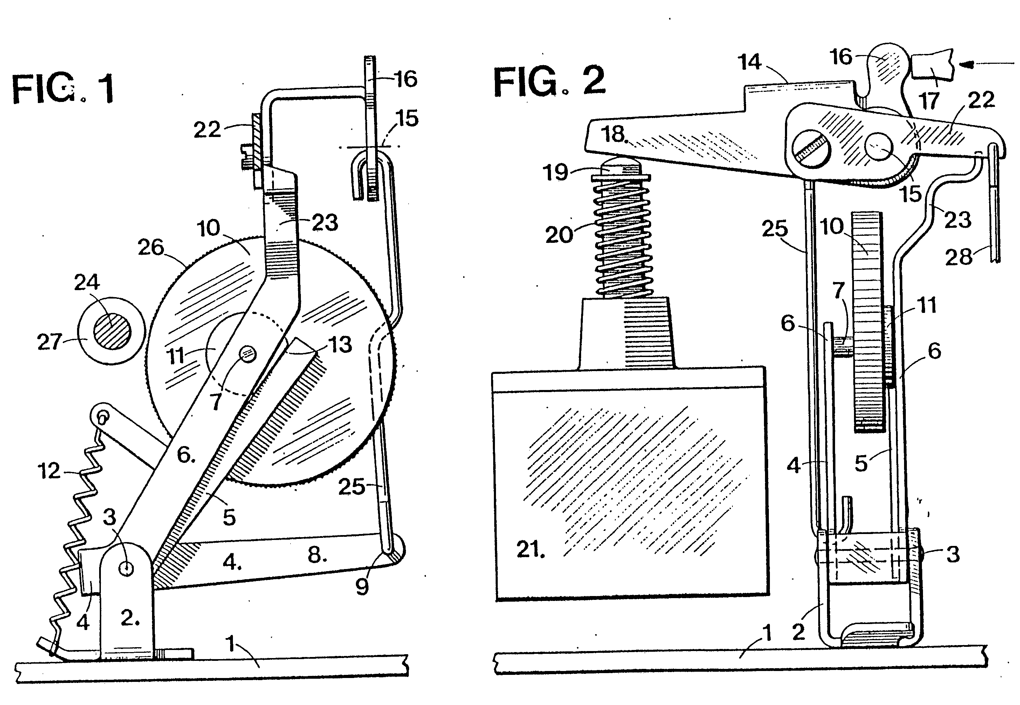

Le mécanisme de butée illustré au dessin est fixé sur un bâti 1 part un support 2 muni d'un pivot 3. Un levier 4 et un bras 5 sont articulés autour de ce pivot 3. Le levier 4 est constitué par une tôle découpée et pliée pour former, d'une part, un bras double 6 portant un axe 7 et, d'autre part, un bras de levier 8 présentant un perçage 9 à son extrémité. Un galet 10 excentrique est pivoté autour de l'axe 7 et présente un épaulement 11 circulaire centré. Le bras 5 est appuyé contre l'épaulement 11 par un ressort de traction 12 et peut coopérer avec une fraisure 13 de l'épaulement 11 pour maintenir le galet 10 dans une position de repos, représentée à la figure 1.

Une équerre 14, pivotant autour d'un axe 15 solidaire du bâti, constitue une butée 16 pour un organe 17 rendu solidaire d'un mobile, non représenté. L'équerre 14 coopère par son extrémité 18 avec une pièce de butée 19 susceptible de coulisser contre l'action d'un ressort 20 et d'un amortisseur 21. Un bec 22 fixé à l'équerre 14 coopère avec l'un des côtés 23 du bras double 6 pour maintenir le galet 10 écarté d'un arbre moteur 24 entraîné en rotation continue par un moteur électrique, non représenté.

Une tringle 25, engagée dans le perçage 9 du bras de levier 8, relie ce dernier à l'équerre 14 pour qu'un pivotement du bras de levier 8 soit transmis en un pivotement correspondant à l'équerre 14.

De préférence, le galet 10 est en matière plastique et présente une surface de roulement 26 crantée. L'arbre moteur 24 est entouré d'une douille en caoutchouc 27 dans sa partie susceptible de coopérer avec la surface de roulement 26 du galet 10.

Lorsque l'organe 17, rendu solidaire du mobile à arrêter, vient à l'encontre de la butée 16 dans le sens de la flèche F, l'équerre 14 pivote et s'appuie par son extrémité 18 contre la pièce de butée 19.

Le côte 23 du bras double 6 se dégage du bec 22, et le galet 10, sous l'action du ressort 12 agissant par l'intermédiaire du bras 5, vient coopérer avec l'arbre moteur 24. Du fait de son excentricité, le galet 10, entraîné en rotation par l'arbre moteur 24, fait pivoter le levier 4. Ce dernier entraîne, par l'intermédiaire du bras de levier 8 et de la tringle 25, un pivotement de l'équerre 14 dans le même sens que celui provoqué par le mobile à arrêter. Entraînée par l'équerre 14, la pièce de butée 19 coulisse contre l'action du ressort 20 et de l'amortisseur 21.

Lorsque le galet 10 a pivoté d'un demi-tour, une tringle 28 fixée au bec 22 commande le verrouillage du mobile qui est à l'arrêt, ainsi que le désaccouplement de l'organe 17 du mobile.

Le galet 10 qui continue à tourner entraîne un pivotement inverse du levier 4 jusqu'à ce que le côté 23 du bras double 6 vienne buter contre le bec 22, l'équerre 14 étant revenue en position de repos. Le bras 5 vient coopérer avec la fraisure 13 de l'épaulement 11, de mainière à maintenir le galet 10 en position de repos.

Le mécanisme décrit ci-dessus permet d'assurer une course d'arrêt constante pour le mobile à arrêter, quelle que soit sa vitesse initiale.

En effet, si la vitesse du mobile est grande, ce sont principalement les forces d'inertie qui agissent sur la pièce de butée 19. Au contraire, si la vitesse du mobile est faible, la pièce de butée 19 est surtout soumise aux forces transmises par le dispositif d'entraînement, tandis que l'organe 17 solidaire du mobile suit le déplacement de la butée 16 coopérant avec la pièce de butée 19.

On peut prévoir de nombreuses variantes du mécanisme objet de l'invention. Par exemple, le dispositif d'entraînement pourrait agir directement sur la pièce de butée 19. Le galet 10 pourrait présenter un profil de came donnant au mobile une décélération progressivement décroissante selon une fonction prédéterminée.

## Revendications

1. Mécanisme de butée à amortissement, comprenant une pièce du butée (19) servant d'arrêt pour un mobile en mouvement, la pièce de butée (19) étant susceptible de se déplacer sous l'effet de l'énergie cinétique dudit mobile contre l'action d'un ressort (20) et d'un amortisseur (21), caractérisé en ce qu'il comprend un dispositif d'entraînement (10, 24) de la pièce de butée (19) provoquant un déplacement prédéterminé de cette dernière dans le même sens que le déplacement produit par le mobile lorsqu'il vient en butée, ce dispositif d'entraînement (10, 24) étant rendu actif par le mobil arrivant en position de début de butée.

2. Mécanisme selon la revendication 1, caractérisé en ce que le dispositif d'entraînement (10, 24) est actionné par un moteur électrique.

3. Mécanisme selon la revendication 2, caractérisé en ce que le dispositif d'entraînement (10, 24) comprend une came (10) entraînée en rotation et transmettant à la pièce de butée (19) un mouvement correspondant à la variation de son rayon.

4. Mécanisme selon la revendication 3, caractérisé en ce que la came (10) est constituée par un galet (10) excentrique monté sur un bras (6) d'un levier (4) pivotant autour d'un pivot fixe (3), l'autre bras (8) étant relié mécaniquement à la pièce de butée (19), le galet (10) étant agencé pour être entraîné par un arbre moteur (24) entraîné lui-même en rotation continue par le moteur électrique.

5. Mécanisme selon la revendication 4, caractérisé en ce qu'il comprend un ressort de rappel (12) du galet (10) vers l'arbre moteur (24), ce ressort (12) agissant sur le galet (10) par l'intermédiaire d'un bras (5) pivotant autour du pivot fixe (3) et appuyé contre un épaulement circulaire (11) du galet (10).

6. Mécanisme selon la revendication 5, caractérisé en ce que l'épaulement (11) du galet (10) présente une fraisure (13) coopérant avec le bras (5) pour maintenir le galet (10) en position de repos.

7. Mécanisme selon la revendication 6, caractérisé en ce que qu'il comprend une équerre (14) montée pivotante autour d'un axe (15) et constituant une butée (16), cette équerre (14) étant susceptible de coopérer avec la pièce de butée (19) par pivotement lors d'un choc et comportant un bec (22) susceptible de coopérer avec le bras (6) du levier (4) portant le galet (10) pour maintenir ledit galet (10) écarté de l'arbre moteur (24) en position de repos.

8. Mécanisme selon la revendication 7, caractérisé en ce qu'il comprend une tringle (25) reliant le bras (8) du levier (4) à l'équerre (14), ladite tringle (25) et l'équerre (14) constituant ladite liaison mécanique entre le bras (8) et la pièce de butée (19).

9. Mécanisme selon la revendication 8, caractérisé en ce que le galet (10) est en matière plastique et présente une surface de roulement (26) crantée.

10. Mécanisme selon la revendication 9, caractérisé en ce que l'arbre moteur (24) est entouré d'une douille en caoutchouc (27) dans sa partie susceptible de coopérer avec la surface de roulement (26) du galet (10).

## Claims

1. Absorption thrust mechanism, which includes a thrust piece (19) which acts as a stop for a moving body in motion, the thrust piece (19) being prone to displacement under the effect of kinetic energy of the said moving body against the action of a spring (20) and a shock absorber (21), characterized by the fact that it includes a driving device (10, 24) of the thrust piece (19) causing a predetermined displacement of the latter in the same direction as the displacement produced by the moving body, when it abuts, the said driving device being put into action by the moving body getting in position of beginning abutment.

2. Mechanism according to claim 1, characterized by the fact that the driving device is activated by an electric motor.

3. Mechanism according to claim 2, characterized by the fact that the driving device includes a cam (10), which is engaged in a rotation and which transmits to the thrust piece a movement corresponding to the variation of its radius.

4. Mechanism according to claim 3, characterized by the fact that the cam is constituted of an eccentric roller (10) mounted on an arm (6) of a lever (4) which rotates around a fixed pin (3), the other arm (8) being linked mechanically to the thrust piece (19), the roller (10) being arranged in such a way that it is activated by driving shaft (24), engaged in continuing rotation by the electric motor.

5. Mechanism according to claim 4, characterized by the fact that it includes a draw spring (12) of the roller (10) toward the driving shaft (24), that spring (12) acting on the roller (10) by way of an arm (5) which rotates around the fixed pin (3) and leaning against a circular shouldering (11) of the roller (10).

6. Mechanism according to claim 5, characterized by the fact that the shouldering (11) of the roller (10) has a countersink (13) which works together with the arm (5) so as to maintain the roller (10) in a rest position.

7. Mechanism according to claim 6, characterized by the fact that it includes a square (14) mounted in a pivotally manner on an axis (15) and forming an abutment (16), that square (14) being prone to work together with the thrust piece (19) through rotation during a shock and being comprised of a tip (22) which is prone to work together with the arm (6) of the lever (4) carrying the roller (10) to maintain the said roller (10) away from the driving shaft (24) in a rest position.

8. Mechanism according to claim 7, characterized by the fact that it includes a rod (25) which links the arm (8) of the lever (4) to the square (14), the said rod (25) and square (14) constituting said mechanic link between the arm (8) and the thrust piece (19).

9. Mechanism according to claim 8, characterized by the fact that the roller (10) is made of plastic and has a notched tread (26).

10. Mechanism according to claim 9, characterized by the fact that the driving shaft (24) is surrounded by a rubber sleeve (27) in its part prone to work together with tread (26) of the roller (10).


### Patentansprüche

1. Anschlageinrichtung mit Dämpfung, umfassend einen zum Anhalten eines sich bewegenden Elementes dienenden Anschlagteil (19), welcher (19) unter der Wirkung der kinetischen Energie des besagten Elementes, entgegen der Wirkung einer Feder (20) und eines Dämpfers (21), jeweils verschiebbar ist, dadurch gekennzeichnet, dass sie eine Antriebsvorrichtung (10, 24) des Anschlagteiles (19) umfasst, die eine vorgewählte Verschiebung des Anschlagteiles (19) in derselben Richtung bewirkt, wie die durch das in Anschlag kommende bewegliche Element hervorgerufene Verschiebung, wobei die Antriebsvorrichtung (10, 24) durch das in Anschlagslage kommende bewegliche Element in Betrieb gesetzt wird.

2. Einrichtung nach Anspruch 1, dadurch gekennzeichnet, dass die Antriebsvorrichtung durch einen Elektromotor angetrieben wird.

3. Einrichtung nach Anspruch 2, dadurch gekennzeichnet, dass die Antriebsvorrichtung eine Kurvenscheibe (10) umfasst, die in Drehung angetrieben wird und dem Anschlagteil eine der Veränderung ihres Radius entsprechende Bewegung überträgt.

4. Einrichtung nach Anspruch 3, dadurch gekennzeichnet, dass die Kurvenscheibe aus einer exzentrischen Reibrolle (10) besteht, die auf einem Arm (6) eines an einer gestellfesten Achse (3) angelenkten Hebels (4) sitzt, dessen anderer Arm (8) mit dem Anschlagteil (19) mechanisch verbunden ist, und dass die Reibrolle (10) so angeordnet ist, dass sie durch eine Antriebswelle (24) angetrieben wird, welche ihrerseits durch den Elektromotor kontinuierlich angetrieben wird.

5. Einrichtung nach Anspruch 4, dadurch gekennzeichnet, dass sie eine Feder (12) zur Rückführung der Reibrolle (10) zur Antriebswelle (24) umfasst, und dass diese Feder (12) auf die Reibrolle (10) unter Zwischenschaltung eines Armes (5) einwirkt, welcher an der gestellfesten Achse (3) angelenkt ist und sich gegen einen kreisförmigen Ansatz (11) der Reibrolle (10) abstützt.

6. Einrichtung nach Anspruch 5, dadurch gekennzeichnet, dass der Ansatz (11) der Reibrolle (10) eine Ausfräsung (13) aufweist, die mit dem Arm (5) zusammenwirkt, um die Reibrolle (10) in Ruhestellung zu halten.

7. Einrichtung nach Anspruch 6, dadurch gekennzeichnet, dass sie einen Winkel (14) umfasst, der um eine Achse (15) schwenkbar angeordnet ist und einen Anschlag (16) bildet, und welcher (14) bei einem Anprall verschwenkt und mit dem Anschlagteil (19) zusammenwirken wird und eine Nase (22) umfasst, welche jeweils mit dem die Reibrolle (10) tragenden Arm (6) des Hebels (4) zusammenwirkt, um die besagte Reibrolle (10) in Ruhestellung im Abstand von der Antriebsvelle (24) zu halten.

8. Einrichtung nach Anspruch 7, dadurch gekennzeichnet, dass sie ein Gestänge (25) aufweist, welches den Arm (8) des Hebels (4) mit dem Winkel (14) verbindet, wobei das besagte Gestänge (25) und der Winkel (14) die besagte mechanische Verbindung zwischen dem Arm (8) und dem Anschlagteil (19) bilden.

9. Einrichtung nach Anspruch 8, dadurch gekennzeichnet, dass die Reibrolle (10) aus Kunststoff besteht und eine gerippte Rolloberfläche (26) aufweist.

10. Einrichtung nach Anspruch 9, dadurch gekennzeichnet, dass die Antriebswelle (24) and der Stelle, die jeweils mit der Rolloberfläche (26) der Reibrolle (10) zusammenwirkt, mit einer Gummihülse (27) umgeben ist.

FIG. 1

FIG. 2

0010102